# EUROPÄISCHE PATENTSCHRIFT

(11) **EP 3 124 801 B1**
(45) Veröffentlichungstag und Bekanntmachung des Hinweises auf die Patenterteilung: **29.11.2017**
(21) Anmeldenummer: 16001661.4
(22) Anmeldetag: 28.07.2016
(51) Int. Cl.: F16B 5/02, E04B 1/41

(54) **VERBINDUNGSLASCHE ZUM BEFESTIGEN EINES BAUTEILS AN EINER IN EINEM BETONELEMENT EINGELASSENEN ANKERSCHIENE**
CONNECTION TAB FOR ATTACHING A COMPONENT TO AN ANCHOR BAR EMBEDDED IN A CONCRETE ELEMENT
LANGUETTE DE LIAISON DESTINEE A FIXER UN COMPOSANT SUR UN RAIL D'ANCRAGE ENCASTRE DANS UN ELEMENT EN BETON

(30) Priorität: 28.07.2015 DE 102015009541
(43) Veröffentlichungstag der Anmeldung: 01.02.2017
(73) Patentinhaber: Jordahl GmbH, 12057 Berlin (DE)
(72) Erfinder: Mahrenholtz, Christoph, D-12161 Berlin (DE); Ratsch, Rolf, D-14532 Kleinmachnow (DE)
(74) Vertreter: Jungblut & Seuss

(56) Entgegenhaltungen:
- DE-U1-202014 006 758

## Beschreibung

### Gebiet der Erfindung

Die Erfindung betrifft eine justierbare Verbindungslasche zum Befestigen eines Bauteils an einer in einem Betonelement eingelassenen Ankerschiene, ein Betonelement mit einer eingebetteten Ankerschiene, an welcher ein Bauteil fixiert ist, sowie ein Verfahren zur Justierung des Bauteils gegenüber der in dem Betonelement eingelassenen Ankerschiene.

### Stand der Technik und Hintergrund der Erfindung

Bei Betonelementen wird typischerweise zumindest eine im Wesentlichen C-förmige Ankerschiene einbetoniert, welche dazu dient, ein Bauteil an der Ankerschiene und somit an dem Betonelement zu fixieren. Bei bestimmten baulichen Gegebenheiten ist eine Fixierung des Bauteils direkt an bzw. in der Ankerschiene nicht möglich, und hierzu werden dann sog. Verbindungslaschen eingesetzt. Eine Verbindungslasche hat an ihrem einen Ende typischerweise ein im Wesentlichen T-förmiges Laschenende, dessen Außenkontur im Wesentlichen dem Innenraum der Ankerschiene entspricht. Eine solche Verbindungslasche wird dann in eine Ankerschiene dadurch eingeführt, dass die Verbindungslasche mit zur Längserstreckung der Ankerschiene parallelen Hauptflächen mit ihrem Laschenende in den Innenraum der Ankerschiene eingeführt und dann um 90° gedreht wird, wodurch die Flügel des T-förmigen Laschenendes Stege der typischerweise C-förmigen Ankerschiene hintergreifen. Das Verbindungsteil einer Verbindungslasche weist typischerweise Ausnehmungen und/oder Löcher auf, mittels welcher direkt oder indirekt ein Bauteil dann an dem Verbindungsteil der Verbindungslasche befestigt, beispielsweise festgeschraubt wird. Hierbei besteht die Problematik, dass die Einrichtung lediglich eines oder mehrerer kreisrunder Löcher in dem Verbindungsteil der Verbindungslasche keinerlei Justierung des Bauteils gegenüber dem Betonelement erlaubt und insofern eine extrem hohe Fertigungspräzision verlangt ist. Zur Vermeidung dieses Problems können beispielsweise Befestigungslöcher in dem Verbindungsteil der Verbindungslasche als Langlöcher ausgeführt werden, insbesondere mit einer Orientierung in Richtung der Längserstreckung des Verbindungsteils. Ein Beispiel hierfür ist eine Verbindungslasche mit der Typbezeichnung "HKZ" der Firma Halfen, zu betrachten auf www.halfen.de. Im Rahmen der insofern bekannten Verbindungslasche sind im Bereich des Langloches Querriffelungen angeordnet, welche in Verbindung mit einem komplementären geriffelten Unterlegblech eine unerwünschte Verschiebung in Richtung der Längserstreckung des Langloches vermeiden.

Die insofern bekannte Verbindungslasche mit Justierungsmöglichkeit hat insbesondere zum Nachteil, dass eine Justierung nur in einer Dimension, nämlich in Richtung der Längserstreckung des Langloches, erfolgen kann. Zudem kann es stören, dass das geriffelte Unterlegblech, welches in die Riffelung des Verbindungsteils kämmend eingreift, in unerwünschter Weise aufträgt. Auch kann die Kraftübertragung in Richtung des Langlochs nur bei hohen Anzugsmomenten gewährleistet werden, da es andernfalls zum Durchrutschen kommen kann.

Eine Verbindungslasche gemäß Oberbegriff des Anspruchs 1 ist bekannt aus der Druckschrift DE 202014006758 U1.

### Technisches Problem der Erfindung

Der Erfindung liegt daher das technische Problem zugrunde, eine Verbindungslasche anzugeben, an welcher ein Bauteil in zwei Raumdimensionen justierbar befestigt werden kann und ansonsten konventionelle Befestigungsmittel zur Befestigung des Bauteils an der Verbindungslasche verwendet werden können.

### Grundzüge der Erfindung und bevorzugte Ausführungsformen

Zur Lösung dieses technischen Problems lehrt die Erfindung den Gegenstand des Anspruchs 1.

Eine erfindungsgemäß ausgebildete Verbindungslasche hat den Vorteil, dass die Montageausnehmung, in welche Befestigungsmittel zur Befestigung eines Bauteils hindurchgeführt werden, in beiden Dimensionen einer Ebene, welche parallel zu den Hauptflächen der Verbindungslasche liegt, justierbar sind. Mit der zumindest teilweise kämmenden Lochinnenverzahnung sowie Außenverzahnung des Justierstücks ist eine zuverlässige Drehsicherung bei in dem Justierloch eingesetztem Justierstück gewährleistet. Die Anordnung der Montageausnehmung ist dergestalt, dass ihre Außenwandung einen den Innenkreis der Montageausnehmung berührenden (teilweise offenen) Außenkreis bildet, gewährleistet einen maximalen Justierbereich, dessen Längserstreckung in beiden besagten Raumdimensionen dem Durchmesser des Justierlochs minus dem Durchmesser der Montageausnehmung entspricht.

Der Begriff des zylinderförmigen Justierstücks bezeichnet insbesondere ein Justierstück in Form eines senkrechten Kreiszylinders. Die Lochinnenverzahnung des Justierlochs ist zweckmäßigerweise das Justierloch vollständig umlaufend eingerichtet. Hierbei verlaufen die Zahnspitzen typischerweise parallel zur Achse des Justierlochs. Grundsätzlich ist es jedoch auch möglich, dass die Lochinnenverzahnung demgegenüber verschränkt eingerichtet ist mit entsprechend komplementärer Ausbildung der Außenverzahnung des Justierstücks, so dass das Einsetzen des Justierstücks in das Justierloch mit einer Drehbewegung typischerweise von bis zu 10 Winkelgraden erfolgt. Die Kontur der Zähne kann beliebig sein. Beispiele für solche Konturen sind die Dreiecksform, Sinusform, Evolventenform, Zykloidenform, etc.

Grundsätzlich kann die Außenverzahnung des Justierstücks in dem gesamten Zylindermantelbereich des Justierstücks eingerichtet sein, wobei allenfalls der Berührungspunkt des Außenkreises und des Innenkreises frei bleibt. Bevorzugt ist es jedoch, wenn die Außenverzahnung des Justierstücks in einem Teilbereich der Zylindermantelfläche des Justierstücks und dem Berührungspunkt gegenüberliegend symmetrisch angeordnet ist. Typischerweise erstreckt sich dann die Außenverzahnung des Justierstücks über 1-95%, insbesondere 2-80%, vorzugsweise 10-50%, des Umfangs der Zylindermantelfläche des Justierstücks.

Im Berührungspunkt des Innenkreises und des Außenkreises des Justierstücks entsteht ohne Bearbeitung eine extrem scharfkantige Schneide bzw. zwei Schneiden. Zur Vermeidung einer Verletzungsgefahr sowie zur Verbesserung der technischen Stabilität ist es daher bevorzugt, wenn die achsparallelen Kanten des Justierstücks im Bereich des Berührungspunktes verrundet sind.

Vorteilhafterweise ist die Dicke des Justierstücks dergestalt ausgebildet, dass sie der Dicke des Verbindungsteils der Verbindungslasche entspricht. Die Dicke des Justierstücks kann aber auch größer, insbesondere auch kleiner, als die Dicke des Verbindungsteils der Verbindungslasche sein. Im Falle einer gleichen Dicke oder einer geringeren Dicke des Justierstücks ragen keinerlei Bereiche des Justierstücks bei in der Verbindungslasche eingesetztem Justierstück über eine Oberfläche des Verbindungsteils hinaus, und somit sind konventionelle Befestigungselemente ohne weiteres einsetzbar.

Typische Durchmesser eines Justierloches (Innendurchmesser, gemessen entlang des Zahngrundes der Lochinnenverzahnung) und eines Justierstücks (Außendurchmesser, gemessen entlang der Zahnspitzen oder des Zahngrundes der Außenverzahnung) liegen im Bereich von 10 bis 80 mm, insbesondere in den Bereichen 10 bis 15 mm, 18 bis 25 mm, 27 bis 33 mm, oder 47 bis 53 mm. Hierbei kann der Innendurchmesser im Bereich von 0,01 bis 5 mm kleiner als der Außendurchmesser sein, mit der Maßgabe, dass stets Lochinnenverzahnung und Außenverzahnung miteinander kämmen.

Das Flächenverhältnis der Fläche der Montageausnehmung zur Fläche des Justierstückes (in einer Ebene orthogonal zur Zylinderachse des Justierstücks) liegt im Bereich 0,05 bis 0,5, insbesondere im Bereich 0,1 bis 0,4.

Eine besondere Weiterbildung der Erfindung ist darin zu sehen, dass das Justierstück in einer der beiden Zylinderstirnflächen im Bereich einer der umlaufenden Kanten zumindest eine Prägung aufweist, mittels welcher die Kante im Bereich der Zylindermantelfläche des Justierstücks plastisch verformt. Insbesondere können auch mehrere solcher Prägungen, gleichmäßig oder ungleichmäßig über die umlaufende Kante verteilt, eingerichtet sein. Diese Prägungen können Punktförmig sein, aber beispielsweise auch linienförmig. Im Falle von mehreren Prägungen versteht sich, dass diese allesamt an einer der beiden umlaufenden Kanten angeordnet sind. Solche Prägungen können beispielsweise mittels eines Meißel- oder Körnerschlags nahe bei der Kante erzeugt werden. Mit dieser Ausführungsform wird erreicht, dass die Zylindermantelfläche des Justierstücks bei einer der beiden Zylinderstirnflächen durch Materialverdrängung plastisch nach außen verformt wird. Wird nun das Justierstück in das Justierloch eingeführt, gleitet das Justierstück in das Justierloch ein, bis diese plastische Verformung des Justierstücks an einer Kante des Justierlochs anschlägt bzw. zum Anliegen kommt. Mit anderen Worten ausgedrückt, es wird ein Durchfallschutz eingerichtet. Da es sich bei der plastischen Verformung typischerweise um einen kleinen Bereich handelt, wird sich dann beim Anbringen des Bauteils mittels Befestigungselemente, beispielsweise Verschraubung, das Justierstück in das Justierloch unter plastischer Rückverformung der Bereiche bei der Prägung einpressen lassen, bis es plan in der Verbindungslasche liegt. Aus diesem Grund ist es auch bevorzugt, wenn die Verformung im Bereich der Zylindermantelfläche des Justierstücks kleiner als 20 mm³, insbesondere kleiner als 10 mm³, ist bezogen auf jede einzelne Prägung.

Eine weitere Variante eines Durchfallschutzes besteht darin, dass das Justierloch und/oder die Zylindermantelfläche des Justierstücks leicht konisch ausgebildet sind (als Kegelstumpfflächen), wobei die Konizität mit der Maßgabe eingerichtet ist, dass das Justierstück in das Justierloch einsetzbar ist von einer ersten Seite der Verbindungslasche, jedoch nicht auf der zweiten Seite der Verbindungslasche herausfallen kann. Insbesondere kann die Konizität mit der Maßgabe eingerichtet sein, dass bei eingesetztem Justierstück zumindest eine Stirnfläche, oder beide Stirnflächen, mit der Hauptfläche oder den Hauptflächen der Verbindungslasche im Wesentlichen fluchten. Die konische Ausbildung kann über den gesamten Umfang des Justierlochs und/oder der Zylindermantelfläche des Justierstücks eingerichtet sein, oder nur über einen Teilumfang (beispielsweise im Bereich der Lochinnenverzahnung und/oder der Außenverzahnung, oder außerhalb der besagten Verzahnungen). Der Winkel zwischen einer konischen Mantellinie und der Kegelachse kann im Bereich von 1 bis 20°, insbesondere 2 bis 10°, liegen.

In einer weiteren Variante eines Durchfallschutzes kann das Justierstück einen im Bereich einer Stirnfläche des Justierstücks umlaufenden und zur Zylinderachse des Justierstücks koaxialen Kragen aufweisen, welcher entweder auf einer Hauptfläche der Verbindungslasche oder in einer ringförmigen und zum Justierloch koaxialen Kragenausnehmung in einer Hauptfläche der Verbindungslasche in axialer Richtung zum Anliegen kommt. Im ersten Fall ragt die den Kragen aufweisende Stirnfläche des Justierstücks über die Hauptfläche der Verbindungslasche hinaus, in letzteren Fall, insbesondere wenn die axiale Höhe des Kragens der axialen Höhe der Kragenausnehmung entspricht, fluchten besagte Stirnfläche und besagte Hauptfläche. Der Kragen kann in jedem Fall das Justierstück vollständig umlaufen, oder lediglich als Kragensegment ausgebildet sein, i.e. das Justierstück nur teilweise umlaufen. Dabei können 1 bis 10, insbesondere 2 oder 3, Kragensegmente vorgesehen sein, welche im Falle einer Mehrzahl von Kragensegmenten gleichmäßig oder ungleichmäßig über den Umfang des Justierstücks verteilt sein können.
Eine Weiterbildung der vorstehend erläuterten Variante mit Kragen von selbstständiger Bedeutung ist dadurch gekennzeichnet, dass die Lochinnenverzahnung des Justierloches und die Außenverzahnung des Justierstückes entfallen und ersetzt sind durch eine Stirnflächenverzahnung in der Hauptfläche der Verbindungslasche oder in deren Kragenausnehmung (dem Kragen des Justierstücks gegenüberliegend) und/oder eine Stirnflächenverzahnung an dem Kragen des Justierstücks (von der den Kragen tragenden Hauptfläche des Justierstücks wegweisend). Wenn sowohl die Verbindungslasche und der Kragen eine solche Stirnflächenverzahnung aufweisen, kämmen beide Stirnflächenverzahnungen vorzusgweise miteinander. Diese Stirnflächenverzahnung(en) wirken als Verdrehschutz. Diese Wirkung tritt auch dann ein, wenn beispielsweise lediglich der Kragen eine Stirnflächenverzahnung aufweist, denn beim Anzug beispielsweise eines Bolzens, der die Montageausnehmung durchfasst, wird sich die Stirnflächenverzahnung des Kragens in die Hauptfläche oder eine Stirnfläche der Kragenausnehmung einpressen unter plastischer Verformung von Stirnflächenverzahnung und/oder Verbindungslasche. Die Stirnflächenverzahnung kann den Kragen und/oder die Kragenausnehmung vollständig umlaufend eingerichtet sein, oder auch nur in Teilsegmenten umlaufend.

Die Erfindung betrifft auch ein Betonelement mit einer eingebetteten und vorzugsweise im Wesentlichen C-förmigen Ankerschiene, deren Ankerschieneninnenraum zur Oberfläche des Betonelements offen ist, mit einer erfindungsgemäßen Verbindungslasche und mit zumindest einem Befestigungselement, mittels welchem ein Bauteil an dem Verbindungsteil der Verbindungslasche befestigt ist, in dem das Befestigungselement die Montageausnehmung des Justierstücks durchgreift und den Verbindungsteil der Verbindungslasche, das Justierstück sowie das Bauteil unverschieblich gegeneinander fixiert.

Schließlich lehrt die Erfindung ein Verfahren gemäß Anspruch 8.
Im Folgenden wird die Erfindung anhand von lediglich ein Ausführungsbeispiel darstellenden Figuren näher erläutert. Es zeigen:
- Figur 1:: eine erfindungsgemäße Verbindungslasche mit zwei darin eingesetzten Justierstücken,
- Figur 2:: eine perspektivische Detailansicht eines erfindungsgemäßen Justierstücks im Bereich einer plastischen Verformung durch eine Prägung,
- Figur 3:: eine seitliche Ansicht eines mit einem Betonelement verbundenen Bauteils unter Einsatz einer erfindungsgemäßen Verbindungslasche,
- Figur 4:: einen seitlichen Querschnitt einer Variante mit konischem Durchfallschutz,
- Figur 5:: einen seitlichen Querschnitt einer ersten Variante mit Kragen als Durchfallschutz und
- Figur 6:: einen seitlichen Querschnitt einer zweiten Variante mit Kragen als Durchfallschutz,

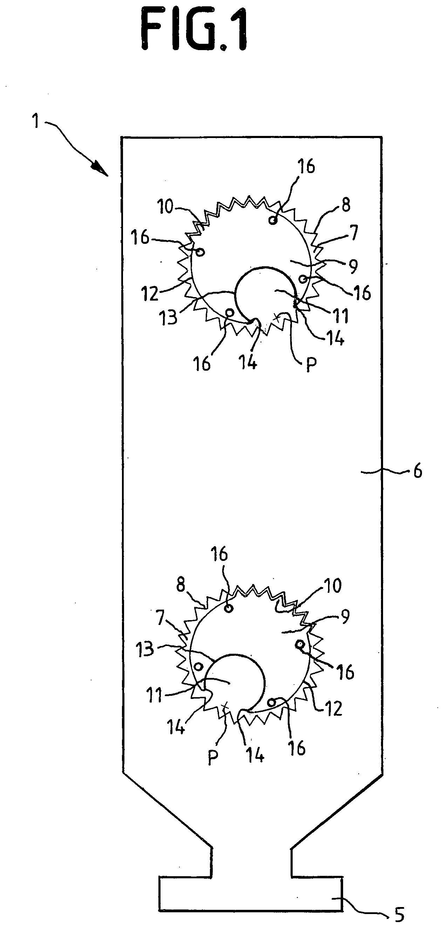

In der Figur 1 erkennt man eine erfindungsgemäße Verbindungslasche 1, welche ein im Wesentlichen T-förmig ausgebildetes Laschenende 5 und ein Verbindungsteil 6 aufweist. Das Verbindungsteil 6 weist zwei kreisrunde Justierlöcher 7 auf, in welchen eine Lochinnenverzahnung 8 eingerichtet ist, und zwar das komplette Justierloch 7 umlaufend. Des Weiteren erkennt man zwei Justierstücke 9, welche in ein jeweils zugeordnetes Justierloch 7 eingesetzt sind. Die Zylindermantelflächen der Justierstücke 9 weisen in einem Teilbereich eine mit der Lochinnenverzahnung 8 des Justierlochs 7 kämmende Außenverzahnung 10 auf. Das Justierstück 9 weist des Weiteren eine Montageausnehmung 11 auf, deren Montageausnehmungsachse parallel zur Zylinderachse des Justierlochs 7 verläuft (senkrecht zur Papierebene). Die Zylindermantelfläche des Justierstücks 9 bildet im betrachteten Querschnitt einen Außenkreis 12. Die Wandung der Montageausnehmung 11 bildet im dargestellten Querschnitt einen Innenkreis 13. Außenkreis 12 und Innenkreis 13 berühren sich in dem Berührungspunkt P. Die achsparallelen Kanten 14 des Justierstücks 9 sind dabei im Bereich des Berührungspunktes P verrundet. Im Einzelnen ist zu erkennen, dass die Außenverzahnung 10 des Justierstücks 9 in einem Teilbereich der Zylindermantelfläche des Justierstücks 9 und dem Berührungspunkt P gegenüberliegend symmetrisch angeordnet ist. Dies bedeutet, dass wenn in dem dargestellten Querschnitt eine Linie durch den Berührungspunkt P sowie den Mittelpunkt des Justierstücks 9 gezogen wird, dem Berührungspunkt P gegenüberliegend die Verzahnung sich gleich weit von dem Schnittpunkt besagter Linie mit der Zylindermantelfläche beidseitig erstreckt. Im Ausführungsbeispiel erstreckt sich die Verzahnung über ca. 15% des Umfangs der Zylindermantelfläche des Justierstücks 9.

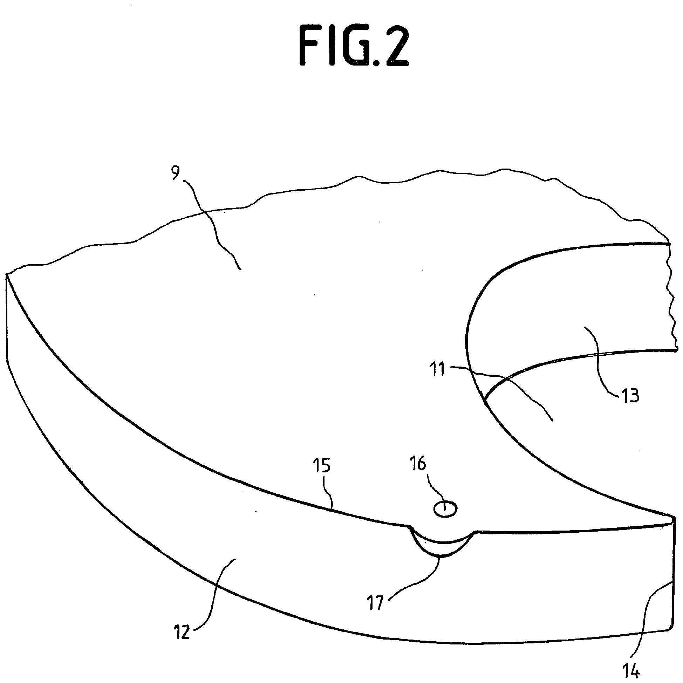

In der Figur 2 erkennt man, dass das Justierstück 9 in einer der beiden Zylinderstirnflächen im Bereich einer der umlaufenden Kanten 15 eine Prägung 16 aufweist, mittels welcher die Kante 15 in dem Bereich der Zylindermantelfläche des Justierstücks 9 eine Verformung 17 bildend, plastisch verformt ist. Hierbei ist diese Verformung 17 dergestalt, dass sie im Bereich der umlaufenden Kante 15 über die Zylindermantelfläche des Justierstücks 9 hinaussteht. Der Figur 1 ist wiederum zu entnehmen, dass mehrere Prägungen 16 und folglich Verformungen 17 im Bereich der umlaufenden Kante 15 des Justierstücks 9 angebracht sind.

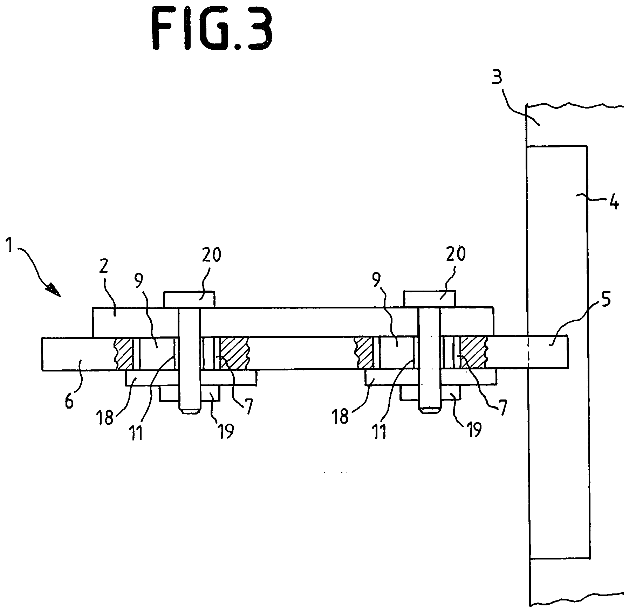

In der Figur 3 erkennt man ein Bauteil 2, welches mit einer erfindungsgemäßen Verbindungslasche 1 an einem Betonelement 3, speziell einer hierin eingelassenen Ankerschiene 4, befestigt ist. Hierbei ist das Laschenende 5 in üblicher Weise in die Ankerschiene 4 eingeführt und ggf. dort fixiert. Der Verbindungsteil 6 ist entsprechend der Figur 1 ausgeführt, und man erkennt in diesem Querschnitt zwei Justierlöcher 7 mit darin eingesetzten Justierstücken 9. Bolzen 17 durchgreifen das Bauteil sowie die Montageausnehmungen 11 der Justierstücke 9. Auf der dem Bauteil 2 gegenüberliegenden Seite sind im Beispiel nicht zwingend erforderliche Scheiben 18 vorgesehen, welche die jeweiligen Justierlöcher 7 vollständig abdecken. Schließlich ist auf einen Bolzen 17 eine Mutter 19 aufgeschraubt, wodurch eine starre Verbindung zwischen dem Bauteil 2 und dem Verbindungsteil 6 erzeugt wird. Das Bauteil 2 kann ebenfalls ein (zweites) Betonelement mit einer hierin eingelassenen Ankerschiene sein. In diesem Fall werden T-Schrauben an Stelle der Bolzen 17 verwendet, wobei der Kopf einer T-Schraube in der Ankerschiene des zweiten Betonelements anliegt.

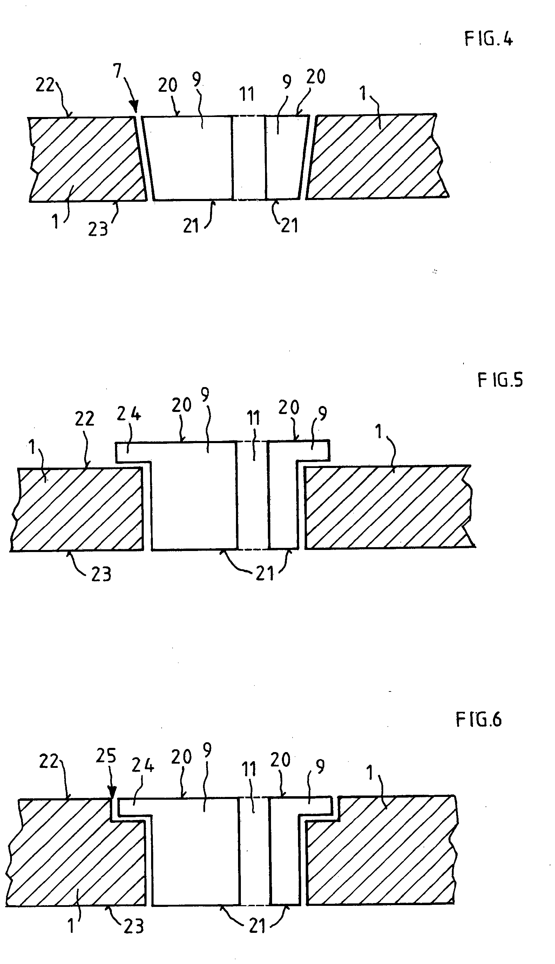

In der Variante eines Durchfallschutzes gemäß Figur 4 sind das Justierloch 7 und die Zylindermantelfläche des Justierstücks 9 leicht konisch ausgebildet (als Kegelstumpfflächen), wobei die Konizität mit der Maßgabe eingerichtet ist, dass das Justierstück 9 in das Justierloch 7 einsetzbar ist von einer ersten Seite der Verbindungslasche 1, jedoch nicht auf der zweiten Seite der Verbindungslasche 1 herausfallen kann. Die Konizität ist mit der Maßgabe eingerichtet, dass bei eingesetztem Justierstück 9 beide Stirnflächen 20, 21, mit den Hauptflächen 22, 23 der Verbindungslasche 1 im Wesentlichen fluchten. Die konische Ausbildung ist im Ausfürhungsbeispiel über den gesamten Umfang des Justierlochs und der Zylindermantelfläche des Justierstücks eingerichtet.

In Varianten eines Durchfallschutzes gemäß den Figuren 5 und 6 weist das Justierstück 9 einen im Bereich einer Stirnfläche 20 des Justierstücks 9 umlaufenden und zur Zylinderachse des Justierstücks 9 koaxialen Kragen 24 auf, welcher entweder auf einer Hauptfläche 22 der Verbindungslasche 1 (Figur 5) oder in einer ringförmigen und zum Justierloch 11 koaxialen Kragenausnehmung 25 in einer Hauptfläche 22 der Verbindungslasche 1 (Figur 6) in axialer Richtung zum Anliegen kommt. Im ersten Fall ragt die den Kragen 24 aufweisende Stirnfläche 20 des Justierstücks 9 über die Hauptfläche 22 der Verbindungslasche 1 hinaus, in letzteren Fall, nämlich weil die axiale Höhe des Kragens 24 der axialen Höhe der Kragenausnehmung 25 entspricht, fluchten besagte Stirnfläche 20 und besagte Hauptfläche 22 miteinander. In beiden Ausführungsbeispielen umläuft der Kragen 24 das Justierstück 9 vollständig.

Der Übersichtlichkeit halber ist in den Figuren 5 und 6 nicht dargestellt, dass die Lochinnenverzahnung 8 des Justierloches 7 und die Außenverzahnung 10 des Justierstückes 9 entfallen können und ersetzt sein können durch eine Stirnflächenverzahnung in der Hauptfläche 22 der Verbindungslasche 1 oder in deren Kragenausnehmung 25 (dem Kragen 24 des Justierstücks 9 gegenüberliegend) und/oder eine Stirnflächenverzahnung an dem Kragen 24 des Justierstücks 9 (von der den Kragen 24 tragenden Hauptfläche 20 des Justierstücks 9 wegweisend). Wenn sowohl die Verbindungslasche 1 und der Kragen 24 eine solche Stirnflächenverzahnung aufweisen, kämmen beide Stirnflächenverzahnungen vorzusgweise miteinander. Diese Stirnflächenverzahnung(en) wirken als Verdrehschutz. Diese Wirkung tritt auch dann ein, wenn beispielsweise lediglich der Kragen 24 eine Stirnflächenverzahnung aufweist, denn beim Anzug beispielsweise eines Besfetigungselements 17, 18, 19, das die Montageausnehmung 11 durchfasst, wird sich die Stirnflächenverzahnung des Kragens 24 in die Hauptfläche 22 oder eine Stirnfläche der Kragenausnehmung 25 einpressen unter plastischer Verformung von Stirnflächenverzahnung und/oder Verbindungslasche 1. Bezüglich der Varianten der Figuren 4 bis 6 sind zudem auch alle im allgemeinen Teil der Beschreibung dargestellte weitere Varianten möglich.

## Patentansprüche

1. Verbindungslasche (1) zum Befestigen eines Bauteils (2) an einer in einem Betonelement (3) eingelassenen Ankerschiene (4),
mit einem im Wesentlichen T-förmig ausgebildeten Laschenende (5) und einem Verbindungsteil (6),
wobei das Verbindungsteil (6) zumindest ein im Wesentlichen kreisrundes Justierloch (7) mit Innenlochverzahnung (8) aufweist, und
mit zumindest einem im Wesentlichen zylinderförmigen Justierstück (9), dessen Zylindermantelfläche zumindest in einem Teilbereich eine mit der Lochinnenverzahnung (8) des Justierlochs (7) kämmende Außenverzahnung (10) aufweist,
wobei das Justierstück (9) eine Montageausnehmung (11) aufweist, dessen Montageausnehmungsachse parallel zur Zylinderachse des Justierstücks (9) verläuft,
wobei die Zylindermantelfläche des Justierstücks (9) im Querschnitt orthogonal zur Zylinderachse des Justierstücks (9) einen Außenkreis (12) bildet,
wobei die Wandung der Montageausnehmung (11) einen Innenkreis (13) bildet,
**dadurch gekennzeichnet,**
**dass** der Außenkreis (12) und der Innenkreis (13) sich in einem Berührungspunkt (P) berühren.

2. Verbindungslasche (1) nach Anspruch 1, wobei die Außenverzahnung (10) des Justierstücks (9) in einem Teilbereich der Zylindermantelfläche des Justierstücks (9) und dem Berührungspunkt (P) gegenüberliegend symmetrisch angeordnet ist.

3. Verbindungslasche (1) nach Anspruch 1 oder 2, wobei die Außenverzahnung des Justierstücks (9) sich über 1-95%, insbesondere 5-80%, vorzugsweise 10-50%, des Umfangs der Zylindermantelfläche des Justierstücks (9) erstreckt.

4. Verbindungslasche (1) nach einem der Ansprüche 1 bis 3, wobei die achsparallelen Kanten (14) des Justierstücks (9) im Bereich des Berührungspunktes (P) verrundet sind.

5. Verbindungslasche (1) nach einem der Ansprüche 1 bis 4, wobei die dicke des Justierstücks (9) der Dicke des Verbindungsteils (6) der Verbindungslasche (1) entspricht.

6. Verbindungslasche (1) nach einem der Ansprüche 1 bis 5, wobei das Justierstück (9) in einer der beiden Zylinderstirnflächen im Bereich einer der umlaufenden Kanten (15) zumindest eine Prägung (16) aufweist, mittels welcher die Kante (15) in den Bereich der Zylindermantelfläche des Justierstücks (9), eine Verformung (17) bildend, plastisch verformt ist.

7. Betonelement (3)
mit einer eingebetteten und vorzugsweise im Wesentlichen C-förmigen Ankerschiene (4), deren Ankerschieneninnenraum zur Oberfläche des Betonelements (3) offen ist,
mit einer Verbindungslasche (1) nach einem der Ansprüche 1 bis 6, und
mit zumindest einem Befestigungselement (17, 18, 19), mittels welchem ein Bauteil (2) an dem Verbindungsteil (6) der Verbindungslasche (1) befestigt ist, in dem das Befestigungselement (17, 18, 19) die Montageausnehmung (11) des Justierstücks (9) durchgreift und den Verbindungsteil (6) der Verbindungslasche (1), das Justierstück (9) sowie das Bauteil (2) unverschieblich gegeneinander fixiert.

8. Verfahren zur Justierung eines Bauteils (2) gegenüber einer Ankerschiene (4), in dem eine Verbindungslasche (1) mit dem Laschenende (5) in die Ankerschiene (4) eingeführt wird, die Position eines Befestigungselements (17, 18, 19) des Bauteils (2) zur Ankerschiene (4) eingestellt wird und in dem das Justierstück (9) in einer Drehposition im Justierloch (7) eingesetzt wird, in welcher das Befestigungselement (17, 18, 19) und die Montageausnehmung (11) miteinander fluchten,
**dadurch gekennzeichnet,**
**dass** die Verbindungslasche (1) gemäß einem der Ansprüche 1 bis 6 ausgebildet ist.

## Claims

1. A connecting tab (1) for securing a component (2) to an anchorage rail (4) embedded in a concrete element (3),
comprising a substantially T-shaped tab end (5) and a connecting part (6),
the connecting part (6) including at least one substantially circular adjustment hole (7) with an internal toothing (8), and
comprising at least one substantially cylindrical adjustment piece (9), the cylindrical envelope surface of which includes at least in a partial section an external toothing (10) meshing with the internal toothing (8) of the adjustment hole (7),
the adjustment piece (9) including a mounting recess (11), the axis of which is parallel to the cylinder axis of the adjustment piece (9),
the cylindrical envelope surface of the adjustment piece (9) forming, in a cross-section orthogonal to the cylinder axis of the adjustment piece (9), an outer circle (12),
the wall of the mounting recess (11) forming an inner circle (13),
**characterized by** that
the outer circle (12) and the inner circle (13) contact each other in a point of contact (P).

2. The connecting tab (1) according to claim 1, wherein the external toothing (10) of the adjustment piece (9) is disposed, in a partial section, symmetrically opposite to the cylindrical envelope surface of the adjustment piece (9) and the point of contact (P).

3. The connecting tab (1) according to claim 1 or 2, wherein the external toothing of the adjustment piece (9) extends over 1-95 %, in particular 5-80 %, preferably 10-50 %, of the periphery of the cylindrical envelope surface of the adjustment piece (9).

4. The connecting tab (1) according to one of claims 1 to 3, wherein the axially parallel edges (14) of the adjustment piece (9) are rounded in the region of the point of contact (P).

5. The connecting tab (1) according to one of claims 1 to 4, wherein the thickness of the adjustment piece (9) corresponds to the thickness of the connecting part (6) of the connecting tab (1).

6. The connecting tab (1) according to one of claims 1 to 5, wherein the adjustment piece (9) includes, in one of the two cylinder front faces in the region of one of the peripheral edges (15), at least one embossment (16), by means of which the edge (15) is plastically deformed in the region of the cylindrical envelope surface of the adjustment piece (9), thus creating a deformation (17).

7. A concrete element (3)
comprising an embedded and preferably substantially C-shaped anchorage rail (4), the interior of which is open toward the surface of the concrete element (3),
comprising a connecting tab (1) according to one of claims 1 to 6, and
comprising at least one securing element (17, 18, 19), by means of which a component (2) is secured to the connecting part (6) of the connecting tab (1), in which the securing element (17, 18, 19) penetrates the mounting recess (11) of the adjustment piece (9) and secures the connecting part (6) of the connecting tab (1), the adjustment piece (9), and the component (2) in a non-slidable manner relative to each other.

8. A method for adjusting a component (2) relative to an anchorage rail (4), wherein a connecting tab (1) is introduced with the tab end (5) into the anchorage rail (4), the position of a securing element (17, 18, 19) of the component (2) relative to the anchorage rail (4) is adjusted, and the adjustment piece (9) is fitted in a rotary position in the adjustment hole (7), in which the securing element (17, 18, 19) and the mounting recess (11) are aligned to each other, **characterized by** that
the connecting tab (1) is configured according to one of claims 1 to 6.

## Revendications

1. Languette de liaison (1) pour la fixation d'un composant (2) à un rail d'ancrage (4) encastré dans un élément en béton (3),
comprenant une extrémité (5) de la languette sensiblement en T et une partie de liaison (6),
la partie de liaison (6) comportant au moins un trou de réglage (7) sensiblement circulaire avec une denture intérieure (8), et
comprenant au moins une pièce de réglage (9) sensiblement cylindrique, la surface latérale cylindrique de laquelle comporte au moins dans une partie une denture extérieure (10) engrenant avec la denture intérieure (8) du trou de réglage (7),
la pièce de réglage (9) comportant un évidement de montage (11), dont l'axe s'étend en parallèle à l'axe du cylindre de la pièce de réglage (9), la surface latérale cylindrique de la pièce de réglage (9) formant un cercle extérieur (12) en coupe transversale orthogonal à l'axe du cylindre de la pièce de réglage (9),
la paroi de l'évidement de montage (11) formant un cercle intérieur (13),
**caractérisée en ce que**
le cercle extérieur (12) et le cercle intérieur (13) sont en contact mutuel dans un point de contact (P).

2. Languette de liaison (1) selon la revendication 1, dans laquelle la denture extérieure (10) de la pièce de réglage (9) est située, dans une partie, symétriquement en vis-à-vis de la surface latérale cylindrique de la pièce de réglage (9) et du point de contact (P).

3. Languette de liaison (1) selon la revendication 1 ou 2, dans laquelle la denture extérieure de la pièce de réglage (9) s'étend sur 1-95 %, en particulier 5-80 %, de préférence 10-50 %, de la périphérie de la surface latérale cylindrique de la pièce de réglage (9).

4. Languette de liaison (1) selon une des revendications 1 à 3, dans laquelle les arêtes (14) parallèles à l'axe de la pièce de réglage (9) sont arrondies dans la zone du point de contact (P).

5. Languette de liaison (1) selon une des revendications 1 à 4, dans laquelle l'épaisseur de la pièce de réglage (9) correspond à l'épaisseur de la partie de liaison (6) de la languette de liaison (1).

6. Languette de liaison (1) selon une des revendications 1 à 5, dans laquelle la pièce de réglage (9) comporte, dans une des deux surfaces frontales du cylindre dans la zone d'une des arêtes périphériques (15), au moins une empreinte (16), au moyen de laquelle l'arête (15) est plastiquement déformée dans la zone de la surface latérale cylindrique de la pièce de réglage (9), donc réalisant une déformation (17).

7. Élément en béton (3)
comprenant un rail d'ancrage (4) encastré et de préférence sensiblement en C, l'intérieur duquel est ouvert vers la surface de l'élément en béton (3),
comprenant une languette de liaison (1) selon une des revendications 1 à 6, et
comprenant au moins un élément de fixation (17, 18, 19), au moyen duquel un composant (2) est fixé à la partie de liaison (6) de la languette de liaison (1), dans lequel l'élément de fixation (17, 18, 19) traverse l'évidement de montage (11) de la pièce de réglage (9) et fixe la partie de liaison (6) de la languette de liaison (1), la pièce de réglage (9), et le composant (2) à non-coulissement entre eux.

8. Procédé de réglage d'un composant (2) par rapport à un rail d'ancrage (4), dans lequel une languette de liaison (1) est introduite avec l'extrémité (5) de la languette dans le rail d'ancrage (4), la position d'un élément de fixation (17, 18, 19) du composant (2) par rapport au rail d'ancrage (4) est réglée, et la pièce de réglage (9) est insérée dans une position rotative dans le trou de réglage (7), dans lequel l'élément de fixation (17, 18, 19) et l'évidement de montage (11) sont alignés entre eux,
**caractérisé en ce que**
la languette de liaison (1) est réalisée selon une des revendications 1 à 6.
